# EUROPÄISCHE PATENTSCHRIFT

(11) **EP 1 977 124 B1**
(45) Veröffentlichungstag und Bekanntmachung des Hinweises auf die Patenterteilung: **25.02.2009**
(21) Anmeldenummer: 06819036.2
(22) Anmeldetag: 16.12.2006
(51) Int. Cl.: F16C 11/10

(54) **EINRICHTUNG ZUM HALTEN UND POSITIONIEREN VON GERÄTEN, WERKSTÜCKEN UND WERKZEUGEN**
DEVICE FOR HOLDING AND POSITIONING IMPLEMENTS, WORKPIECES AND TOOLS
DISPOSITIF POUR MAINTENIR ET POSITIONNER DES APPAREILS, DES PIÈCES ET DES OUTILS

(30) Priorität: 19.01.2006 DE 202006000908 U; 26.10.2006 DE 202006016392 U
(43) Veröffentlichungstag der Anmeldung: 08.10.2008
(73) Patentinhaber: Drees, Jürgen, 57636 Mammelzen (DE)
(72) Erfinder: Drees, Jürgen, 57636 Mammelzen (DE)
(74) Vertreter: Aue, Hans-Peter
(86) Internationale Anmeldenummer: PCT/EP2006/012151
(87) Internationale Veröffentlichungsnummer: WO 2007/082577

(56) Entgegenhaltungen:
- US-A1- 5 118 058
- US-A1- 2003 039 506

## Beschreibung

Die Erfindung bezieht sich auf eine Einrichtung zum Halten und Positionieren von Geräten, Werkstücken und Werkzeugen, mit einer Konsole mit einem Tragarm, an dessen ersten Endbereich eine mit einem Gerätehalter verbindbare Scharniergelenkanordnung mit zwei um 90° versetzten Scharnierachsen angeordnet ist, und mit einer Positioniervorrichtung zum Einstellen mittels Shimstechnik und Spannen eines Gerätes, Werkstückes oder Werkzeuges, mit einem Fußteil und einem Flanschteil zur Aufnahme des Gerätes, Werkstückes oder Werkzeuges.

Geräte, wie Bildschirme, Telefone oder Maschinenteile, werden häufig über eine Konsole an einem feststehenden Teil, z.B. der Karosserie eines Fahrzeuges, der Wand eines Gebäudies, einer Tischplatte oder dgl., angeordnet. Zur veränderbaren Positionierung des jeweiligen Gerätes kann der Gerätehalter gegenüber dem Tragarm in gewissen Grenzen verschwenkbar angeordnet sein und kann in seiner jeweiligen Verstellposition z.B. mittels einer Schraubverbindung fixiert werden.

Es sind Konsolen bekannt geworden, bei denen zur Positionierung eines Gerätes ein Kugelgelenk zwischen dem Tragarm und dem Gerätehalter angeordnet ist, so dass eine relativ schnelle Positionierung des entsprechenden Gerätes im Hinblick auf eine gewünschte räumliche Position möglich ist.

Nachteilig ist bei einer derartigen Kugelgelenkanordnung allerdings, dass eine Fixierung des Gerätehalters nur durch relativ aufwendige Maßnahmen erreicht werden kann, wobei häufig der Gerätehalter mit dem Gerät axial gegen ein entsprechendes feststehendes, kugelkalottenförmiges Anschlagselement axial verschoben werden muss.

Es sind ebenfalls Konsolen bekannt geworden, bei denen zur Positionierung eines Gerätes am Ende des Tragarmes der Konsole eine Scharniergelenkanordnung vorgesehen ist, die aus zwei hintereinander angeordneten Gabelgelenken bestehen, wobei die Scharnierachsen der beiden Gabelgelenke um 90° zueinander versetzt angeordnet sind.

Nachteilig ist bei derartigen bekannten Scharniergelenkanordnungen, dass sie relativ platzaufwendig sind, da jeweils zwei getrennte, hintereinander angeordnete Gelenke erforderlich sind, wobei zur Lagefixierung des Gerätehalters jedes Gelenk mit einer eigenen Fixiereinrichtung versehen werden muss.

Gleiches gilt auch für Konsolen mit hintereinander angeordneten Dreh- und Gabelgelenken, wie sie etwa bei Konsolen für Bildschirme oder Telefone üblich sind. Auch bei diesen Konsolen sind zu einer genauen Lagefixierung des entsprechenden Gerätes zwei getrennte Fixiereinrichtungen erforderlich.

Im Allgemeinen dienen Positionier- und Spannvorrichtungen dem Positionieren bzw. Einstellen und Verbinden des Merkstückes oder des Werkzeuges in Maschinenelementen, Anlagen, Vorrichtungen und dergleichen während der Bearbeitung. Oft stützen sie nicht nur die Bearbeitungskräfte ab, sondern bringen außerdem das Werkstück oder Werkzeug selbsttätig beim Positionier- und Spannvorgang in eine bestimmte, zur einwandfreien Bearbeitung erforderliche Lage. Eine Positionier- und Spannvorrichtung ist stets für verschiedene Formen und Abmessungen von Werkstücken oder Werkzeugen innerhalb eines bestimmten Bereiches verwendbar. Solche Positionier- und Spannvorrichtungen und auch Kraftspanner sind in verschiedenen Ausführungsformen bekannt. Neben umlaufenden Werkstück- bzw. Werkzeugspannern, wie Spitzen, Spanndorne, Spannzangen, Spannfutter, Teileinrichtungen gibt es auch eine Vielzahl von festen Werkstück- bzw. Werkzeugspannern, z.B. Setzstöcke, Spannstöcke, Magnetspanner, Spanneisen, Spannunterlagen, Kloben usw.

Nachteilig bei diesen Spannvorrichtungen ist deren beschränkte Wirkrichtung, nämlich, dass das Werkstück oder Werkzeug nur in einer Ebene oder Achse gespannt werden kann. Komplexere Spannvorrichtungen ermöglichten ein Spannen des Werkstückes oder Werkzeuges auch in zwei Ebenen, nämlich in X- und Y-Richtung, manchmal auch räumlich in X-, Y- und Z-Richtung. Allerdings sind solche komplexen Spanngebilde nichts anderes als aus mehreren Spannern kombinierte Vorrichtungen, die dadurch zwangsläufig technisch sehr aufwändig, großvolumig und kostenintensiv sind. Für kleinere und hochpräzise Bearbeitungsschritte und kompaktere Arbeitsmaschinen sind solche komplexen Spannvorrichtungen meist nicht geeignet.

Zum Positionieren bzw. Einstellen des Gerätes, Werkstückes bzw. Werkzeuges an der Positionier- und/oder Spannvorrichtung wird häufig die so genannten Shimstechnik angewendet. Diese wird insbesondere in der Ventiltechnik benutzt, um Ventilspiele einzustellen. Hierbei werden Shims, d.h. Metallscheiben oder -platten unterschiedlicher Dicke, gegebenenfalls auch unterschiedlicher Form, verwendet, um die entsprechenden Bauteile der Vorrichtung, des Maschinenelementes usw. zu positionieren und/oder einzustellen.

Nachteilig ist der erhöhte Raumbedarf zum Positionieren bzw. Einstellen und Spannen des Werkstückes bzw. Werkzeuges an der Positionier- bzw. Spannvorrichtung, da die notwendigen Bauteile zum Positionieren, insbesondere die verwendeten Shims, außerhalb der eigentlichen Vorrichtung zum Einsatz kommen. Dies kann vor allem bei kompakten oder komplexen Werkstücken und Werkzeugen zu Problemen hinsichtlich der Platzierung der Shims und Bauteile bei beengten Raumverhältnissen führen, so dass sich diese gegenseitig behindern können.

Weiterhin ist aus der US 5 118 058 A1 eine Einrichtung zum Halten und Positionieren von Geräten mit einer Konsole mit einem Tragarm nach dem Oberbegriff von Anspruch 1 bekannt, wo eine kugelförmige Scharniergelenkanordnung mit zwei um 90° versetzten Scharnierachsen angeordnet ist, wobei die Scharniergelenkanordnung ein zylinderförmig ausgebildetes erstes Scharnierelement umfasst, welches formschlüssig in einer in den Tragarm vorgesehenen kugeligen Lagerbuchse um die Längsachse des ersten Scharnierelementes schwenkbar angeordnet ist. Dabei sind der Schwenkbereich des ersten Scharnierelementes sowie seine Ausgestaltung derart gewählt, dass bei der Fixierung des ersten Scharnierelementes ebenfalls eine Fixierung eines zweiten Scharnierelementes durch Klemmung erfolgt.

Es ist Aufgabe der Ereindung, eine Einrichtung der eingangs genannten Art zu schaffen, die kompakt ausgestaltet und kostengünstig herstellbar ist und bei der auf einfache Weise eine Lagefixierung des Gerätehalters ermöglicht wird und bei der ein Gerät, Werkstück bzw. Werkzeug auf engstem Raum in drei Ebenen bzw. Achsen präzise einstellbar ist.

Erfindungsgemäß wird die Aufgabe durch eine Einrichtung nach Anspruch 1 gelöst.

Bei der Konsole der erfindungsgemäßen Einrichtung wird als Scharniergelenkanordnung ein Radialgleitlager verwendet, wobei das Lagergehäuse und die Lagerbuchse durch den Tragarm und die Welle durch das zylinderförmige erste Scharnierelement gebildet wird, das seinerseits im Bereich der Lagerbuchse als Gabelgelenk ausgebildet ist. Durch die spezielle Ausgestaltung der Lagerbuchse und des ersten Scharnierelementes ist eine Fixierung des Gerätehalters durch nur eine einzige Fixiereinrichtung möglich.

Die Konsole weist unter anderem den Vorteil auf, dass durch die Anordnung der beiden Gelenke in einer Ebene eine hohe Stabilität erreicht wird. Dieses ist besonders im Vorrichtungs- und Maschinenbau wichtig, wenn die Konsole als Gelenkkonsole für Kraftspanner, Bohr- und Fügeeinheiten, Zylinderpositionierelementen etc. verwendet werden soll.

Die Konsole der erfindungsgemäßen Einrichtung hat für die Praxis aber noch folgende bedeutsame Vorteile. Mit der gewählten Scharniergelenkanordnung können beide Einstellwinkel mit nur zwei Endmaßen gegenüber'einer Bezugsfläche genau eingestellt werden. Die Winkeleinstellungen sind dadurch leicht und sicher reproduzierbar. Beide Winkellagen können bei Bedarf durch ein Verstiften mit einem Passstift dauerhaft gesichert werden.

Als Bezugsfläche kommt insbesondere die dem Gerätehalter zugewandte Stirnseite des Tragarmes in Betracht bzw. eine in diesem Bereich gedachte oder fiktive Bezugsfläche. Eine solche kann dort mittels zweier parallel verlaufender Stifte dargestellt quasi aufgespannt werden, wobei die Stifte vorübergehend, nämlich lediglich für die Dauer der Einstellung, in entsprechende, in Richtung der ersten Scharnierachse beabstandete, taschenförmige Ausnehmungen an der Stirnseite des Tragarmes oberhalb der Scharniergelenkanordnung eingesetzt werden.

Nach dem Einlegen der beiden Stifte in die taschenförmigen Ausnehmungen des Tragarmes wird zur Einstellung des Gerätehalters dieser, gegebenenfalls zusammen mit einem daran befestigten Maschinenteil, so lange um die beiden Schwenkachsen verschwenkt, bis entsprechender seitlich an dem Geräte halter vorgesehene Anschlagsflächen gegen die Stifte drücken. Anschließend kann dann eine Lagefixierung des Gerätehalters mittels der vorstehend beschriebenen Fixiereinrichtung erfolgten.

Bei einer ersten Ausführungsform der Konsole ist zum Zusammendrücken der beiden sich seitlich an die schlitzförmige Ausnehmung anschließenden Schenkel des Tragarmes mindestens ein Schraubbolzen vorgesehen, dessen Schaft in ein Innengewinde des einen Schenkels einschraubbar und dessen kopfseitiges Ende sich außenseitig an dem anderen Schenkel abstützt.

Als vorteilhaft hat es sich erwiesen, wenn zur Vermeidung einer axialen Verschiebung des ersten Scharnierelementes diese auf ihrer der schlitzförmigen Ausnehmung zugewandte Seite eine in Umfangsrichtung verlaufende gewölbte, nutenförmige Ausnehmung aufweist, in welche ein durch eine Bohrung durch den Tragarm hindurch geführter Führungsstift eingreift, wobei die Wölbung der nutenförmigen Ausnehmung derart gewählt ist, dass das erste Scharnierelement eine vorgegebene Schwenkbewegung ausführen kann.

Der Abstand der Randbereiche der Ausnehmung des ersten Endbereiches des Tragarmes kann vorzugsweise derart gewählt sein, dass durch die Randbereiche die Schwenkbewegung des ersten Scharnierelementes begrenzt wird.

Um die Klemmwirkung des als Gabelgelenk wirkenden ersten Scharnierelementes zu optimieren, sind bodenseitig die beiden Wandbereiche der Aufnahme verlängernde schlitzförmige Ausnehmungen vorgesehen und/oder in dem bodenseitigen Bereich der Aufnahme eine schlitzförmige Ausnehmung eingearbeitet, die sich von der Außenseite des ersten Scharnierelementes bis in die Nähe des Bodens der Ausnehmung erstreckt.

Bei einer weiteren Ausführungsform der erfindungsgemäßen. Konsole ist die Lage der zweiten Scharnierachse derart gewählt, dass sie die erste Scharnierachse, vorzugsweise im mittleren Bereich des ersten Scharnierelementes, schneidet.

Die Positioniervorrichtung der erfindungsgemäßen Einrichtung kann mit ihrem Fußteil auf einer Basis, beispielsweise einem Maschinenbett oder einer Montageeinheit oder dergleichen, befestigt werden.

Der besondere Vorteil der Positioniervorrichtung besteht darin, dass die Positionierung bzw. Einstellung des Gerätes, Werkstückes oder Werkzeuges in allen drei Ebenen bzw. Achsen auf engstem Raum, nämlich innerhalb der vorrichtung erfolgt. Somit wird nicht mehr Platz bzw. Raumvolumen benötigt als die Vorrichtung selbst braucht. Eine Positionierung des Gerätes, Werkstückes oder Werkzeuges auf einer Montageplatte oder dergleichen ist nicht erforderlich.

Mit dieser Positioniervorrichtung ist es möglich, ein auf dem Flanschteil befestigtes Gerät, Werkstück oder Werkzeug in drei Ebenen bzw. Achsen, also in X-, Y- und Z-Richtung präzise zu positionieren bzw. einzustellen und sodann fest zu spannen. Vorzugsweise mit Shims und Endmaßen werden die exakten Dicken der Einstellklötze und der Einstellplatte ermittelt. Die Anbringung der Einstellklötze der vorbestimmten und ausgewählten Dicken an den zumindest zwei rechtwinklig zueinander liegenden Seitenflächen der Öffnung im Fußteil bewirkt einerseits eine exakte Maßeinstellung in X-Richtung durch den einen Einstellklotz und anderseits in Y-Richtung durch den anderen Einstellklotz, da dieser rechtwinklig zum Einstellklotz in X-Richtung ausgerichtet ist.

Die im Querschnitt quadratische oder rechteckige Öffnung im Fußteil bewirkt durch ihre ebenen Seitenflächen eine verrutschsichere Anlage der Einstellklötze.

Zusätzlich erfolgt durch das Einsetzen der Einstellplatte mit der vorbestimmten und ausgewählten Dicke eine exakte Maßeinstellung in Z-Richtung, also in der Höhe der Positioniervorrichtung.

Anzumerken ist, dass generell mehrere Einstellklötze und/oder Einstellplatten verwendet werden können, wobei sich deren Dicken auf ein vorbestimmtes Maß addieren.

Beim Einsetzen des Zapfens des Flanschteils durch die Öffnung in der Einstellplatte in die Öffnung im Fußteil legt sich der Zapfen an die in die Öffnung im Fußteil eingesetzten Einstellklötze und an die beiden freien Seitenflächen der Öffnung an. Wird nun das Befestigungselement im Fußteil betätigt, so dass das Befestigungselement am Zapfen des Flanschteils eingreift, wird der Zapfen mit dem Fußteil und gleichzeitig die Einstellplatte mit dem Flanschteil und dem Fußteil fest verspannt.

Da der Zapfen am Flanschteil geringere Abmessungen als die Öffnung im Fußteil besitzt, verbleibt ein hinreichend großes Spiel, um Einstellklötze unterschiedlicher Dicken in die Öffnung des Fußteils einzusetzen. Das Spie ist dabei von der Größe der Positioniervorrichtung selbst sowie der Differenz von den Durchmessern der Öffnung im Fußteil und des Zapfens im Flanschteil abhängig.

Bei einer vorteilhaften Ausgestaltung der Positioniervorrichtung besitzt diese einen rechteckigen oder kreisrunden. Querschnitt, wobei das Fußteil, die Einstellplatte und das Flanschteil einen maßgleichen Querschnitt aufweisen. Dadurch kann die Positioniervorrichtung sehr kompakt und preiswert hergestellt werden.

Nach einer weiteren Ausbildung der Positioniervorrichtung weist der,Zapfen des Flanschteils eine Einkerbung auf, in die das am Fußteil einsetzbare Befestigungselement den Zapfen arretierend eingreift. Die Einkerbung am Zapfen des Flanschteils bewirkt in Verbindung mit dem vom Fußteil angreifenden Befestigungselement eine sichere Verspannung des Fußteils, des Flanschteils und der Einstellplatte gegeneinander. Bevorzugt ist das Befestigungselement als Schraube ausgebildet, beispielsweise als Innensechskantschraube oder Madenschraube.

Weiterhin können die Eckbereiche der Öffnung im Fußteil und die Eckbereiche des Zapfens am Flanschteil abgerundet sein. Dadurch werden scharfe Kanten vermieden, die beim häufigen Gebrauch der Positioniervorrichtung infolge des Austausches der Einstellklötze beschädigt werden würden und zu Verklemmungen des Zapfens des Flanschteils in der Öffnung des Fußteils führen können.

Zweckmäßigerweise sind die Einkerbung an einem abgerundeten Eckbereich des Zapfens am Flanschteil ausgebildet und das Befestigunselement an einem dazu korrespondierenden Eckbereich des Fußteils angeordnet, da diese Flächen den günstigsten Angriffspunkt für das Befestigungselement und dessen Eingriff in die Einkerbung am Zapfen des Flanschteils bewirken.

Zusätzlich kann vorgesehen werden, dass die Einstellplatte und/oder das Flanschteil mittels Stiften oder Schrauben auf dem Fußteil befestigbar ist. Diese Maßnahme ergibt eine weitere verrutschsichere Verbindung zwischen Flanschteil, Einstellplatte und Fußteil und bewirkt eine exakte Lage der Einstellplatte.

Darüber hinaus können auch die Einstellklötze mittels Stiften oder Schrauben an den rechtwinklig zueinander liegenden Seitenflächen der Öffnung im Fußteil befestigt werden, um dies verrutschsicher in der Öffnung des Fußteils zu arretieren.

Weiterhin weist nach einer weiteren Ausgestaltung der Positioniervorrichtung das Flanschteil an seiner Oberseite eine Mehrzahl von Bohrungen zur Befestigung eines Werkstückes oder Werkzeuges auf, dass nun, wie zuvor beschrieben, für eine weitere Bearbeitung bzw. Handhabung exakt justiert ist.

Bevorzugt besteht die Einrichtung aus einer Aluminiumlegierung, aus Stahl oder aus Kunststoff, wobei die Wahl des Werkstoffes vom Einsatzzweck der Positioniervorrichtung und der geforderten Genauigkeit des Einstell- und Spannvorganges abhängig ist.

Die Konsole und die Positioniervorrichtung können selbstverständlich auch getrennt jeweils für sich für ihre vorgesehenen Anwendungszwecke verwendet werden.

Weitere Einzelheiten und Vorteile der Erfindung ergeben sich aus den folgenden anhand von Figuren erläuterten Ausführungsbeispielen. Es zeigen:
- Fig. 1: die Explosionsdarstellung einer perspektivisch wiedergegebene erfindungsgemäßen Einrichtung mit einer Konsole mit Tragarm, erstem und zweitem Scharnierelement sowie einem Gerätehalter und ei- ner Positioniervorrichtung im noch nicht ver- spannten Zustand, wobei die Konsole mit der Posi- tioniervorrichtung verbindbar ist; '
- Fig. 2: die in Fig. 1 dargestellte Anordnung der Konsole im zusammengebauten Zustand;
- Fig. 3: eine vergrößerte Schnittdarstellung durch die in Fig. 2 dargestellte Konsole entlang der dort mit III-III bezeichneten Schnittlinie, wobei der Fuß- bereich und der Gerätehalter weggelassen sind;
- Fig. 4: eine vergrößerte Seitenansicht des in Fig. 1 dar- gestellten ersten Scharnierelementes der Konsole;
- Fig. 5: einen Querschnitt durch das in Fig. 4 dargestell- te erste Scharnierelement der Konsole entlang der dort mit V V bezeichneten Schnittlinie.
- Fig. 6: eine Explosivdarstellung der Positioniervorrich- tung gemäß Fig. 1.

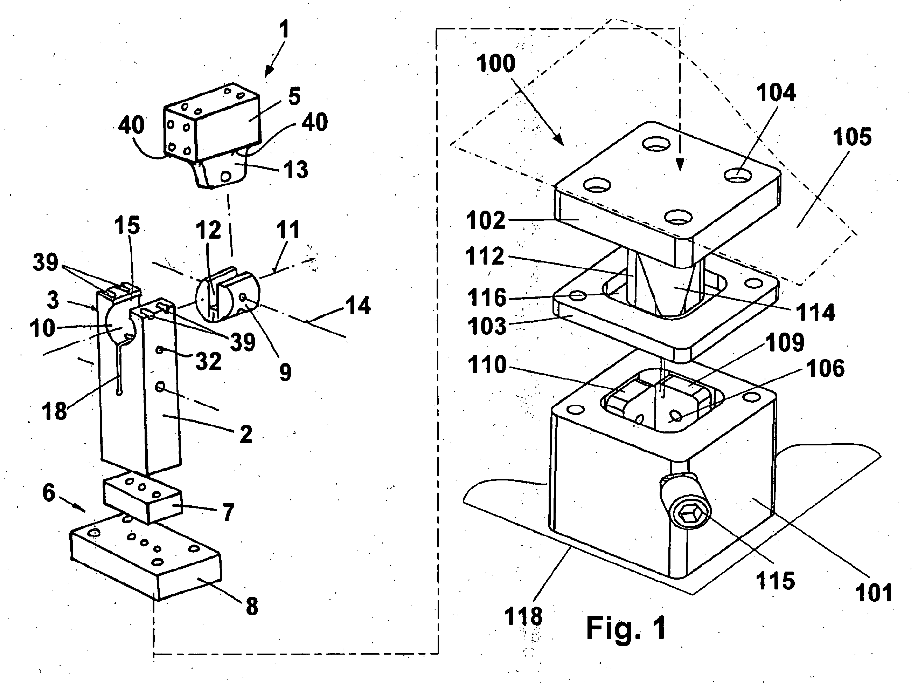

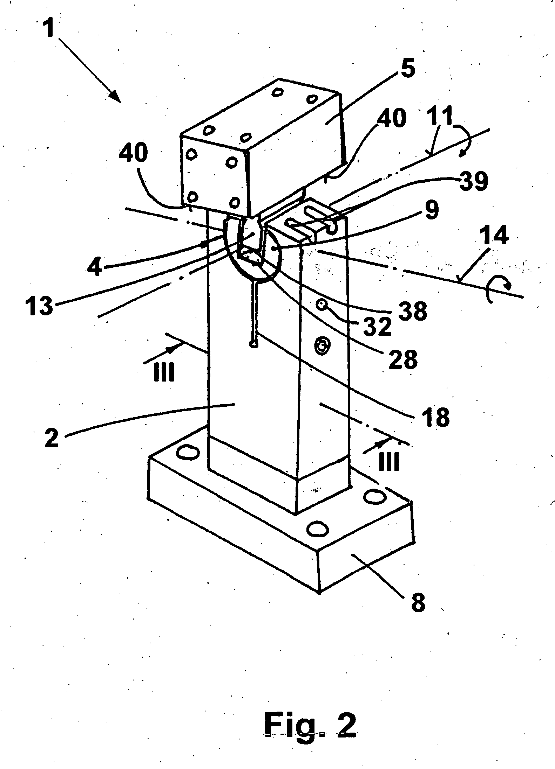

In den Fig. 1 und Fig. 2 ist mit 1 eine Konsole bezeichnet, die einen beispielsweise aus einer Aluminiumlegierung bestehenden Tragarm 2 umfasst. An seinem ersten Endbereich 3 ist der Tragarm 2 über eine Scharniergelenkanordnung 4 mit einem Gerätehalter 5 verbunden, an dem beispielsweise eine nicht dargestellte Spannvorrichtung zum Halten von Geräten, Werkstücken oder Werkzeugen befestigbar ist.

An seinem zweiten Endbereich 6 ist der Tragarm 2 über ein Zwischenteil 7 mit einer Flanschplatte 8 verbunden, mittels welcher die Konsole 1 an einer nicht dargestellten Unterlage, beispielsweise an einer Maschine, befestigt werden kann.

Die Scharniergelenkanordnung 4 umfasst ein ebenfalls beispielsweise aus einer Aluminiumlegierung bestehendes, zylinderförmig ausgebildetes erstes Scharnierelement 9, das formschlüssig in einer in dem Tragarm 2 vorgesehenen Lagerbuchse 10 um eine die Längsachse 11 des ersten Scharnierelementes 9 bildende erste Scharnierachse schwenkbar angeordnet ist.

Das erste Scharnierelement 9 besitzt im Bereich der Lagerbuchse 10 eine nutenförmige Aufnahme 12 für ein mit dem Gerätehalter 5 verbundenes zweites Scharnierelement 13, welches um eine zweite durch das erste Scharnierelement 9 hindurch geführte Scharnierachse 14 schwenkbar ist und welches sich durch eine Ausnehmung 15 in dem ersten Endbereich 3 des Tragarmes 2 hindurch und nach außen erstreckt.

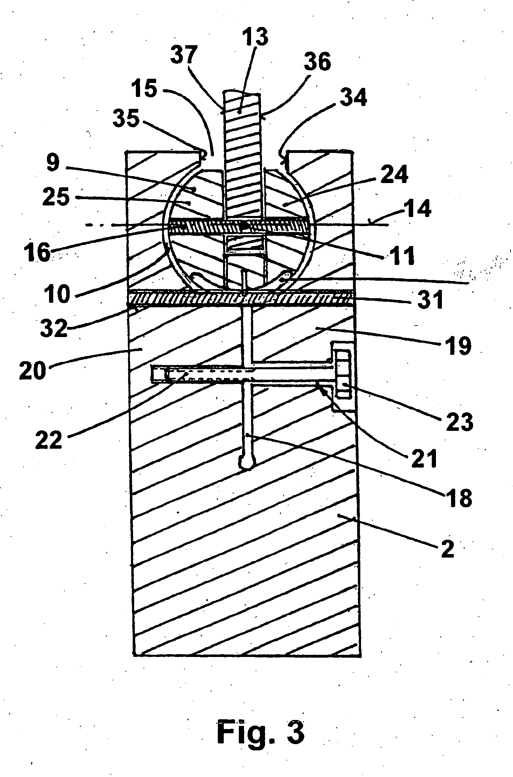

Wie insbesondere Fig. 3 zeit, wird die zweite Scharnierachse 14 durch einen Stift 16 realisiert, welcher seitlich durch eine entsprechende Bohrung 17 durch das erste Scharnierelement 9 hindurch geführt ist. Die Lage der zweiten Scharnierachse 14 ist derart gewählt, dass sie die erste Scharnierachse 11 im mittleren Bereich des ersten Scharnierelementes 9 und damit auch der Lagerbuchse 10 schneidet.

Der Tragarm 2 weist eine schlitzförmige Ausnehmung 18 auf, die sich von dem unteren Bereich der Lagerbuchse 10 in Richtung auf den zweiten Endbereich 6 des Tragarmes 2 erstreckt, so dass die beiden sich seitlich an die schlitzförmige Ausnehmung 18 anschließenden Schenkel 19, 20 des Tragarmes 2 elastisch zusammendrückbar sind und dadurch eine Fixierung des ersten Scharnierelementes 9 durch Klemmung, d.h. Reibschluss, durchführbar ist.

Dabei erfolgt bei dem in den Figuren dargestellten Ausführungsbeispiel das Zusammendrücken der beiden sich seitlich an die schlitzförmige Ausnehmung 18 anschließenden Schenkel 19, 20 des Tragarmes 2 mittels eines Schraubbolzens 21, dessen Schaft 22 in ein Innengewinde des Schenkels 20 einschraubbar ist und dessen kopfseitiges Ende 23 gemäß Fig. 3 sich außenseitig an dem Schenkel 19 abstützt.

Der Schwenkbereich des ersten Scharnierelementes 9 sowie seine Ausgestaltung sind derart gewählt, dass bei der Fixierung des ersten Scharnierelementes 9 ebenfalls ein elastisches Zusammendrücken der beiden das zweite Scharnierelement 13 umschließenden Schenkel 24, 25 des ersten Scharnierelementes 9 und somit auch eine Fixierung des zweiten Scharnierelementes 13 durch Klemmung erfolgt.

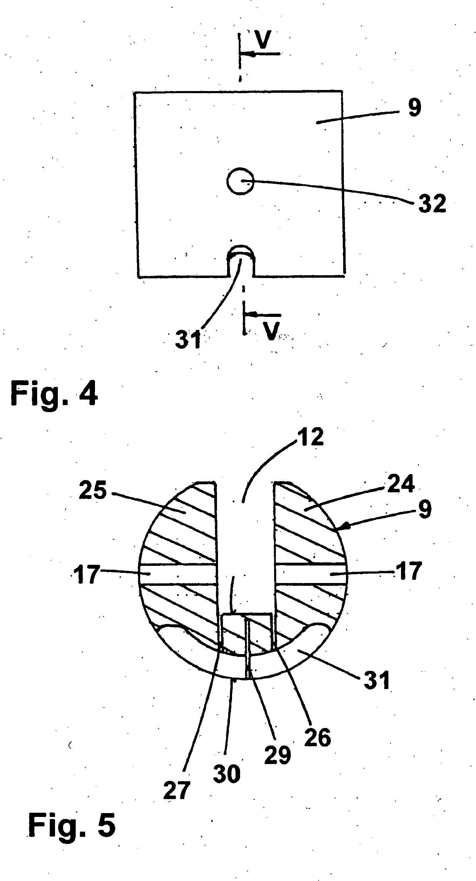

Um dieses elastische Zusammendrücken der beiden Schenkel 24, 25 des ersten Scharnierelementes 9 zu unterstützen, ist vorgesehen, dass das erste Scharnierelement 9 sowohl bodenseitig die beiden Wandbereiche der nutenförmigen Aufnahme 12 verlängernde schlitzförmige Ausnehmungen 26, 27 aufweist als auch in dem bodenseitigen Bereich 28 der nutenförmigen Aufnahme 12 eine schlitzförmige Ausnehmung 29, die sich gemäß Fig. 5 von der Außenseite 30 des ersten Scharnierelementes 9 bis in die Nähe des Bodens 28 der nutenförmigen Aufnahme 12 erstreckt. Dabei ist die schlitzförmige Ausnehmung 29 etwa mittig zwischen den schlitzförmigen Ausnehmungen 26 und 27 angeordnet.

Um ferner zu vermeiden, dass das erste Scharnierelement 9 sich bei der bestimmungsgemäßen Verwendung der Konsole 1 axial verschiebt, ist vorgesehen, dass es auf seiner der schlitzförmigen Ausnehmung 18 des Tragarmes 2 zugewandten Seite eine in Umfangsrichtung verlaufende gewölbte, nutenförmige Ausnehmung 31 aufweist, in welche gemäß Fig. 3 ein lurch eine Bohrung 32 des Tragarmes 2 hindurch geführter Führungsstift 33 eingreift. Dabei ist die Wölbung der nutenförmigen Ausnehmung 31 derart gewählt, dass das erste Scharnierelement 9 eine vorgegebene Schwenkbewegung ausführen kann.

Die Vorgabe der Schwenkbewegung des ersten Scharnierelementes 9 erfolgt bei dem dargestellten Ausführungsbeispiel durch entsprechende Wahl des Abstandes der beiden Randbereiche 39, 35 der Ausnehmung 15 des Tragarmes 2, gegen welche die Seitenflächen 36, 37 des zweiten Scharnierelementes 13 bei einer entsprechenden Winkelstellung des ersten Scharnierelementes 9 zur Anlage kommen.

Bei einem praktischen Ausführungsbeispiel betrug der Schwenkwinkel des ersten Scharnierelementes 9 in bezug auf die in Fig. 3 dargestellte Ausgangsstellung ± 30°. Der Schwenkwinkel des zweiten Scharnierelementes 13 betrug bei diesem Ausführungsbeispiel ± 10°. Er hängt unter anderem davon ab, welchen Abstand die dem Boden 28 der nutenförmigen Aufnahme 12 zugewandte Fläche 38 des zweiten Scharnierelementes 13 von dem Boden 28 besitzt.

Mit der vorstehend beschriebenen Scharniergelenkanordnung ist es außerdem möglich, auf einfache Weise vorgegebene Winkelstellungen des Gerätehalters 5 und damit auch der Spannvorrichtung in bezug auf den Tragarm 2 sehr genau und reproduzierbar einzustellen. Hierzu sind in der dem Gerätehalter 5 zugewandten Stirnseite des Tragarmes 2 in Richtung der ersten Scharnierachse 11 beabstandete, taschenförmige Ausnehmungen 39 vorgesehen. In zwei hintereinander angeordneten Ausnehmungen 39 wird jeweils ein nicht dargestellter Stift mit entsprechenden, die Winkelstellungen definierenden Außendurchmessern eingelegt.

Nach dem Einlegen der beiden Stifte in die taschenförmigen Ausnehmungen 39 des Tragarmes 2 wird zur Einstellung des Gerätehalters 5 dieser, gegebenenfalls zusammen mit der daran befestigten Spannvorrichtung, so lange um die beiden Schwenkachsen 11, 14 verschwenkt, bis entsprechende, seitlich an dem Gerätehalter 5 vorgesehene Anschlagflächen 40 die Oberflächen der beiden Stifte berühren. Anschließend kann dann eine Lagefixierung des Gerätehalters 5 mittels des Schraubbolzens 21 erfolgen.

Die Konsole ist selbstverständlich nicht auf das vorstehend beschriebene Ausführungsbeispiel beschränkt. So kann das Zusammendrücken der beiden Schenkel 19, 20 des Tragarmes 2 zur Klemmung des ersten Scharnierelementes 9 auch durch zwei schraubbolzen oder eine Schraubverbindung mittels separater Muttern erfolgen.

Ferner kann die axiale Verschiebung des ersten Scharnierelementes 9 auch dadurch sicher verhindert werden, dass das erste Scharnierelement 9 an seinen beiden Enden jeweils mit seinem Bund versehen wird.

Außerdem kann die Begrenzung der Schwenkbewegung statt durch Vorgabe des Abstandes der Randbereiche der Ausnehmung des Tragarmes 2 auch durch entsprechende Wahl der Länge der gewölbten, nutenförmigen Ausnehmung 31 festgelegt werden.

Schließlich muss die Konsole nicht zwingend aus einer Aluminiumlegierung bestehen, sondern es kann, entsprechend den Anforderungen an die Konsole, auch ein anderes Material, z.B. Stahl oder Kunststoff, verwendet werden.

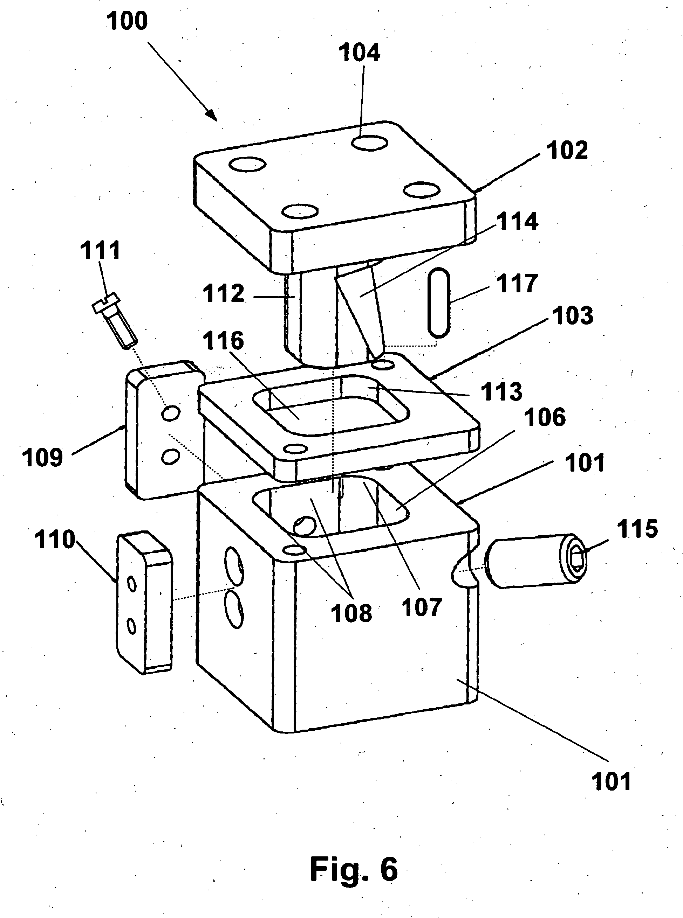

Die Positioniervorrichtung 100 der erfindungsgemäßen Einrichtung gemäß den Fig. 1 und 6 besteht ebenfalls beispielsweise aus einer Aluminiumlegierung, Stahl oder Kunststoff. Sie umfasst als Hauptbestandteile ein Fußteil 101, ein Flanschteil 102 und eine zwischen diese einbringbare Einstellplatte 103. Das Flanschteil 102 besitzt an seiner Oberseite eine Mehrzahl von Bohrungen 104 zur Befestigung z.B. der zuvor beschriebenen Konsole 1 oder eines Werkstückes 105, das in Fig. 1 schematisch als Strich-Punkt-Strich-Linie dargestellt ist. Die Positioniervorrichtung 100 hat einen rechteckigen und in den Hauptteilen maßgleichen Querschnitt.

In das Fußteil 101 ist mittig eine quadratische Öffnung 106 eingebracht. Jedoch sind die Eckbereiche 107 der Öffnung 106 abgerundet. An jeder von zwei rechtwinklig zueinander liegenden inneren Seitenflächen 108 der Öffnung 106 ist jeweils ein Einstellklotz 109, 110 mittels Schrauben 111, von denen in Fig. 2 nur eine dargestellt ist, befestigt, wobei die Einstellklötze 109, 110 jeweils eine bestimmte, beliebig wählbarer Dicke aufweisen. Hierbei kann der Einstellklotz 109 eine andere Dicke aufweisen als der Einstellklotz 110. Der Einstellklotz 110 erlaubt eine Maßeinstellung zum Verspannen des Werkstückes in X-Richtung und der Einstellklotz 109 in Y-Richtung.

Das Flanschteil 102 hat an seiner Unterseite einen Zapfen 112 angeformt, der eine Form aufweist, die der Öffnung 106 im Fußteil 101 entspricht, jedoch geringere Abmessungen besitzt, also im Durchmesser erheblich kleiner ist als die Öffnung 106 im Fußteil 101. Dieser Zapfen 112 ist an seinen. Eckbereichen 113 ebenso wie die Eckbereiche 107 der Öffnung 106 des Fußteils 101 abgerundet. An einem dieser Eckbereiche 113 ist am Zapfen 112 des Flanschteils 102 eine Einkerbung 114 eingefräst. In diese Einkerbung 114 greift ein am Fußteil 101 eingesetztes Befestigungselement 115, beispielsweise eine Innensechskantschraube,'ein, wenn das Flanschteil 102 mit dem Zapfen 112 in das Fußteil 101 eingesetzt wird. Dieses Befestigungselement 115 verspannt das Fußteil 101, das Flanschteil 102 und die Einstellplatte 103 in Relation zu den Einstellklötzen 109, 110 gegeneinander. Hierbei unerstützt die schräge Fläche der Einkerbung 114 die Spannwirkung gegen das Befestigungselement 115.

Zwischen dem Fußteil 101 und dem Flanschteil 102 ist die Einstellplatte 103 angeordnet, deren Dicke vorbestimmt ist und beliebig gewählt werden kann. Diese dient der Maßeinstellung zum Verspannen des Werkstückes in Z-Richtung. Mittig der Einstellplatte 103 ist eine Öffnung 116 eingebracht, die die gleiche Kontur und Größe aufweist, wie die Öffnung 106 im Fußteil 101 der Positioniervorrichtung 100. Durch diese Öffnung 116 wird der Zapfen 112 des Flanschteils 102 beim Verbinden mit dem Fußteil 101 geführt. Die Einstellplatte 103 kann mittels Stiften 117, von denen in Fig. 2 nur einer dargestellt ist, am Fußteil 101 arretiert werden.

Die Positioniervorrichtung 100 ist gemäß Fig. 1 auf einer schematisch dargestellten Basis 118, z.B. einem Maschinentisch, befestigt.

### Liste der Bezugszeichen

- 1: Konsole
- 2: Tragarm
- 3: erster Endbereich
- 4: Scharniergelenkanordnung
- 5: Gerätehalter
- 6: zweiter Endbereich
- 7: Zwischenteil
- 8: Flanschplatte
- 9: erstes Scharnierelement
- 10: Lagerbuchse
- 11: Längsachse, erste Scharnierachse
- 12: nutenförmige Aufnahme
- 13: zweites Scharnierelement
- 14: zweite Scharnierachse
- 15: Ausnehmung
- 16: Stift
- 17: Bohrung
- 18: schlitzförmige Ausnehmung
- 19: Schenkel
- 20: Schenkel
- 21: Schraubbolzen
- 22: Schaft
- 23: kopfseitige Ende
- 24: Schenkel
- 25: Schenkel
- 26: schlitzförmige Ausnehmung
- 27: schlitzförmige Ausnehmung
- 28: bodenseitiger Bereich, Boden
- 29: schlitzförmige Ausnehmung
- 30: Außenseite
- 31: nutenförmige Ausnehmung.
- 32: Bohrung
- 33: Führungsstift
- 34: Randbereich
- 35: Randbereich
- 36: Seitenfläche
- 37: Seitenfläche
- 38: Fläche
- 39: taschenförmige Ausnehmung
- 40: Anschlagsfläche
- 100: Positioniervorrichtung
- 101: Fußteil
- 102: Flanschteil
- 103: Einstellplatte
- 104: Bohrung
- 105: Werkstück
- 106: Öffnung
- 107: Eckbereich
- 108: Seitenfläche
- 109: Einstellklotz
- 110: Einstellklotz
- 111: Schraube
- 112: Zapfen
- 113: Eckbereich
- 114: Einkerbung
- 115: Befestigungselement
- 116: Öffnung
- 117: Stift
- 118: Basis

## Patentansprüche

1. Einrichtung zum Halten und Positionieren von Geräten, Werkstücken und Werkzeugen, mit einer Konsole (1) mit einem Tragarm (2), an dessen ersten Endbereich (3) eine mit einem Gerätehalter (5) verbindbare Scharniergelenkanordnung (4) mit zwei um 90° versetzten Scharnierachsen (11, 14) angeordnet ist, und mit einer Positioniervorrichtung (100) zum Einstellen mittels Shimstechnik und Spannen eines Gerätes, Werkstückes (105) oder Werkzeuges, mit einem Fußteil (101) und einem Flanschteil (102) zur Aufnahme des Gerätes, Werkstückes (105) oder Werkzeuges, wobei
a) die Scharniergelenkanordnung (4) der Konsole (1) ein zylinderförmig ausgebildetes erstes Scharnierelement (9) umfasst, welches formschlüssig in einer in dem Tragarm (2) vorgesehenen Lagerbuchse (10) um die die Längsachse des ersten Scharnierelementes (9) bildende erste Scharnierachse (11) schwenkbar angeordnet ist; **dadurch gekennzeichnet, dass**
b) das erste Scharnierelement (9) der Konsole (1) im Bereich der Lagerbuchse (10) eine nutenförmige Aufnahme (12) für ein zweites mit dem Gerätehalter (5) verbindbares Scharnierelement (13) besitzt, welches um die zweite durch das erste Scharnierelement (9) hindurch geführte Scharnierachse (14) schwenkbar ist und welches sich durch eine Ausnehmung (15) in dem ersten Endbereich (3) des Tragarmes (2) nach außen erstreckt;
c) der Tragarm (2) der Konsole (1) eine schlitzförmige Ausnehmung (18) aufweist, die sich von dem unteren Bereich der Lagerbuchse (10) in Richtung auf den zweiten Endbereich (6) des Tragarmes (2) erstreckt, so dass durch Zusammendrücken der beiden sich seitlich an die schlitzförmige Ausnehmung (18) anschließenden Schenkel (19, 20) des Tragarmes (2) eine Fixierung des ersten Scharniereiementes (9) durch Klemmung durchführbar ist;
d) der Schwenkbereich des ersten Scharnierelementes (9) der Konsole (1) sowie seine Ausgestaltung derart gewählt sind, dass bei der Fixierung des ersten Scharnierelementes (9) ebenfalls ein Zusammendrücken der beiden das zweite Scharnierelement (13) umschließenden Schenkel (24, 25) des ersten Scharnierelementes (9) und somit auch eine Fixierung des zweiten Scharnierelementes (13) durch Klemmung erfolgt;
e) das Fußteil (101) der Positioniervorrichtung (100) eine mittige, im Querschnitt quadratische oder rechteckige Öffnung (106) aufweist, an deren zumindest zwei rechtwinklig zueinander liegenden Seitenflächen (108) jeweils ein Einstellklotz (109, 110) beliebig wählbarer Dicke befestigbar ist;
f) das Flanschteil (102) der Positioniervorrichtung (100) einen der Form der Öffnung (106) im Fußteil (101) entsprechenden Zapfen (112) mit geringeren Abmessungen als die Öffnung (106) im Fußteil (101) besitzt, der in diese Öffnung (106) einsteckbar ist;
g) zwischen dem Fußteil (101) und dem Flanschteil (102) der Positioniervorrichtung (100) eine Einstellplatte (103) beliebig wählbarer Dicke einsetzbar ist, die eine zur Öffnung (106) des Fußteils (101) kongruenten Öffnung (116) aufweist;
h) der Zapfen (112) des Flanschteils (102) der Positioniervorrichtung (100) in der Öffnung (106) des Fußteils (101) mittels eines Befestigungselementes (115) befestigbar ist; und
i) die Konsole (1) eine Flanschplatte (8) aufweist, die mit dem Flanschteil (102) der Positioniervorrichtung (100) verbindbar ist.

2. Einrichtung nach Anspruch 1, **dadurch gekennzeichnet, dass** zum Zusammendrücken der beiden sich seitlich an die schlitzförmige Ausnehmung (118) anschließenden Schenkel (19, 20) des Tragarmes (2) der Konsole (1) mindestens ein Schraubbolzen (21) vorgesehen ist, dessen Schaft (22) in ein Innengewinde des einen Schenkels (20) einschraubbar ist und dessen kopfseitiges Ende (23) sich außenseitig an dem anderen Schenkel (19) abstützt.

3. Einrichtung nach Anspruch 1, **dadurch gekennzeichnet, dass** zur Vermeidung einer axialen Verschiebung des ersten Scharnierelementes (9) der Konsole (1) dieses auf seiner der schlitzförmigen Ausnehmung (18) zugewandten Seite eine in Umfangsrichtung verlaufende gewölbte, nutenförmige Ausnehmung (31) aufweist, in welche ein durch eine Bohrung (32) durch den Tragarm (2) hindurch geführter Führungsstift (33) eingreift, wobei die Wölbung der nutenförmigen Ausnehmung (31) derart gewählt ist, dass das erste Scharnierelement (9) eine vorgegebene Schwenkbewegung ausführen kann.

4. Einrichtung nach Anspruch 1, **dadurch gekennzeichnet, dass** der Abstand der Randbereiche (34, 35) der Ausnehmung (15) des ersten Endbereiches (3) des Tragarmes (2) der Konsole (1) derart gewählt ist, dass durch die Randbereiche (34, 35) die Schwenkbewegung des ersten Scharnierelementes (9) begrenzt wird.

5. Einrichtung nach Anspruch 1, **dadurch gekennzeichnet, dass** das erste Scharnierelement (9) der Konsole (1) die beiden Wandbereiche der nutenförmigen Aufnahme (12) bodenseitig verlängernde schlitzförmige Ausnehmungen (26, 27) aufweist.

6. Einrichtung nach Anspruch 1, **dadurch gekennzeichnet, dass** das erste Scharnierelement (9) der Konsole (1) in dem bodenseitigen Bereich (28) der nutenförmigen Aufnahme (12) eine schlitzförmige Ausnehmung (29) aufweist, die sich von der Außenseite (30) des ersten Scharnierelementes (9) bis in die Nähe des Bodens (28) der nutenförmigen Aufnahme (12) erstreckt.

7. Einrichtung nach Anspruch 1, **dadurch gekennzeichnet, dass** die Lage der zweiten Scharnierachse (14) des zweiten Scharnierelementes (13) derart gewählt ist, dass sich die beiden Scharnierachsen (11, 14) der Scharniergelenkanordnung (4) der Konsole (1) schneiden.

8. Einrichtung nach Anspruch 1, **dadurch gekennzeichnet, dass** in der dem Gerätehalter (5) zugewandten Stirnseite des Tragarmes (2) der Konsole (1) in Richtung der ersten Scharnierachse (11) zwei beabstandete, tauschenförmige Aushehmungen (39) vorgesehen sind, in welche jeweils ein Stift einlegbar, ist, deren Außendurchmesser die beiden Winkelstellungen des Tragarmes (2) ein bezug auf die besagte Stirnfläche des Tragarmes (2) definieren, und dass seitlich an dem Gerätehalter (5) Anschlagsflächen (40) vorgesehen sind, derart, dass die den Stiften zugewandte Anschlagsfläche (40) die Oberfläche der Stifte berührt, sobald die vorgegebenen. Winkelstellungen des Gerätehalters (5) erreicht sind.

9. Einrichtung nach Anspruch 1, **dadurch gekennzeichnet, dass** die Positioniervorrichtung (100) einen rechteckigen oder kreisrunden Querschnitt besitzt, wobei das Fußteil (101), die Einstellplatte (103) und das Flanschteil (102) einen maßgleichen Querschnitt aufweisen.

10. Einrichtung nach Anspruch 1, **dadurch gekennzeichnet, dass** der Zapfen (112) des Flanschteils (102) der Positioniervorrichtung (100) eine Einkerbung (114) aufweist, in die das am Fußteil (101) einsetzbare Befestigungselement (115) den Zapfen (112) arretierend eingreift.

11. Einrichtung nach Anspruch 1, **dadurch gekennzeichnet, dass** die Eckbereiche (107) der Öffnung (106) im Fußteil (101) und die Eckbereiche (113) des Zapfens (112) am Flanschteil (102) der Positioniervorrichtung (100) abgerundet sind.

12. Einrichtung nach Anspruch 10 oder 11, **dadurch gekennzeichnet, dass** die Einkerbung (114) an einem abgerundetew Eckbereich (113) des Zapfens (112) am Flanschteil (102) ausgebildet und das Befestigungselement (115) an einem dazu korrespondierenden Eckbereich (107) des Fußteils (101) angeordnet sind.

13. Einrichtung nach Anspruch 1, **dadurch gekennzeichnet, dass** die Einstellplatte (103) und/oder das Flanschteil (102) der Positioniervorrichtung (100) mittels Stiften (107) oder Schrauben auf dem Fußteil (101) befestigbar ist.

14. Einrichtung nach Anspruch 1, **dadurch gekennzeichnet, dass** diesEinstellklötze (109, 110) mittels Stiften oder Schrauben (111) an den rechtwinklig zueinander liegenden Seitenflächen (108) der Öffnung (106) im Fußteil (101) der Positioniervorrichtung (100) befestigbar sind.

15. Einrichtung nach Anspruch 1, **dadurch gekennzeichnet, dass** das Flanschteil (102) der Positioniervorrichtung (100) an seiner Oberseite eine Mehrzahl von Bohrungen (104) zur Befestigung eines Gerätes, Werkstückes (105) oder Werkzeuges aufweist.

16. Einrichtung nach Anspruch 1, **dadurch gekennzeichnet, dass** diese aus einer Aluminiumlegierung, aus Stahl oder aus Kunststoff besteht.

## Claims

1. Device for holding and positioning of implements, workpieces and tools, with a console (1) support arm (2), at the end (3) of which a hinge joint arrangement (4)with two hinge axes (11, 14) offset by 90° and connectable to a implement holder (5) is arranged, and with a positioning device (100) for adjustment by means of shims and clamping of an implement, workpiece (105) or tool, with a base (101) and a flange part (102) to hold an implement, workpiece (105) or tool, in which
a) the hinge joint arrangement (4) of the console (1) comprises a cylindrically shaped first hinge element (9), which is arranged form-fitting and pivotable in a bearing bush (10) provided in the support arm (2) about the first hinge axis (11) forming the longitudinal axis of the first hinge element (9), **characterized by** that
b) the first hinge element (9) of the console (1) features a groove-shaped collet (12) in the area of the bearing bush (10) for a second hinge element (13) connectable to the device holder (5), which is pivotable about the second hinge axis (14) running through the first hinge element (9) and which protrudes to the outside through a recess (15) in the first end (3) of the support arm (2);
c) the support arm (2) of the console (1) features a slot-shaped recess (18), which extends from the lower area of the bearing bush (10) towards the second end (6) of the support arm (2), so that the first hinge element (9) is fixed by clamping by pressing the two legs (19, 20) of the support arm (2) together that are formed by the slot-like recess (18);
d) the pivoting range of the first hinge element (9) of the console (1), as well as its design, is chosen in a way that, when the first hinge element (9) is fixed in place, the legs (24, 25) surrounding the second hinge element (13) are also pressed together, thus fixing the second hinge element 13) by clamping;
e) the base (101) of the positioning device (100) features a centered square or rectangular opening (106), to at least two sides of which located at a right angle to each other (108) one adjusting block (109, 110) each of random selectable thickness can be attached;
f) the flange part (102) of the positioning device (100) is equipped with a peg (112) corresponding to the shape of the opening (106) in the base (101), but with smaller dimensions than the opening (106) in the base (101), and which can be inserted in the opening (106);
g) between the base (101) and the flange part (102) of the positioning device (100), an adjusting plate (103) of random selectable thickness is insertable, which features an opening (116) congruent to the opening (106) of the base (101);
h) the peg (112) of the flange part (102) of the positioning device (100) can be fixed in the opening (106) of the base (101) by means of a fixing element (115); and
i) the console (1) features a flange plate (8), which can be connected to the flange part (102) of the positioning device (100).

2. Device according to Claim 1, **characterized by** that at least one threaded bolt (21) is provided for the purpose of pressing together the legs (19, 20) of the support arm (2) formed by the slot-shaped recess (18), the shaft (22) of which can be screwed into a female thread of one leg (20) and the head (23) of which is resting against the other leg (19).

3. Device according to Claim 1, **characterized by** that, to prevent axial shifting of the first hinge element (9) of the console (1), it features on the side facing the slot-shaped recess a concave, groove-shaped recess (31) running in a circumferential direction, in which a guide pin (33) inserted through a borehole (32) through the support arm (2) engages, wherein the arch of the groove-shaped recess (31) has been chosen in such a way that the first hinge element (9) is able to execute a prescribed rotation movement.

4. Device according to Claim 1, **characterized by** that the distance of the edge areas (34, 35) of the recess (15) of the first end area (3) of the support arm (2) of the console (1) is chosen in such a way that the rotation movement of the first hinge element (9) is limited by the edge areas (34, 35).

5. Device according to Claim 1, **characterized by** that the first hinge element (9) of the console (1) features slot-shaped recesses (26, 27) extending the two wall areas of the groove-shaped collet (12) on the bottom side.

6. Device according to Claim 1, **characterized by** that the first hinge element (9) of the console (1) features a slot-shaped recess (29) in the bottom area (28) of the groove-shaped collet (12), which extends from the outside (30) of the first hinge element (9) to the vicinity of the bottom (28) of the groove-shaped collet (12).

7. Device according to Claim 1, **characterized by** that the location of the second hinge axis (14) of the second hinge element (13) has been chosen in such a way that the two hinge axes (11, 14) of the hinge joint arrangement (4) of the console (1) intersect each other.

8. Device according to Claim 1, **characterized by** that two pocket-shaped, spaced recesses (39) are provided on the front end of the support arm (2) of the console (1) facing the device holder (1) in the direction of the first hinge axis (11), in each of which a pin can is insertable, the external diameters of which define the two angle positions of the support arm (2) in relation to the said front face of the support arm (2), and that contact surfaces (40) are provided on the sides of the device holder (5), such that the contact surfaces (40) facing the pins makes contact with the surface of the pins, as soon as the prescribed angle positions of the device holder (5) have been reached.

9. Device according to Claim 1, **characterized by** that the positioning device (100) features a rectangular or circular cross section, wherein the base (101), the adjusting plate (101 and the flange part (102) have an identically dimensioned cross section.

10. Device according to Claim 1, **characterized by** that the peg (112) of the flange part (102) of the positioning device (100) features a notch (114), in which the attaching element (115) insertable into the base (101) engages, thus arresting the peg (112).

11. Device according to Claim 1, **characterized by** that the corner areas (107) of the opening (106) in the base (101) and the corner areas (113) of the peg (112) on the flange part (102) of the positioning device (100) are rounded off.

12. Device according to Claim 10 or 11, **characterized by** that the notch (114) is arranged on the rounded area (113) of the peg (112) on the flange part (102) and that the attaching element (115) is arranged in a corresponding corner area (107) of the base (101).

13. Device according to Claim 1, **characterized by** that the adjusting plate (103) and/or the flange part (102) of the positioning device (100) is attachable by means of pins (107) or screws on the base (101).

14. Device according to Claim 1, **characterized by** that the adjusting blocks (109, 110) are attachable by means of pins or screws (111) on the side surfaces (108) of the opening (106) in the base (101) of the positioning device (100) forming a right angle.

15. Device according to Claim 1, **characterized by** that the flange part (102) of the positioning device (100) features multiple boreholes (104) for the attachment of a device, workpiece (105) or tool on its upper side.

16. Device according to Claim 1, **characterized by** that it is made from an aluminium alloy, steel or synthetic material.

## Revendications

1. Dispositif pour maintenir et positionner des appareils, des pièces à usiner et des outils, avec une console (1) à un bras de support (2) à l'extrémité (3) duquel est disposée une disposition articulée à charnière (4) associée à un porte-appareil (5) avec deux axes à charnière (11, 14) décalés de 90° et avec un dispositif de positionnement (100) pour régler à l'aide de la technique shims et serrer un appareil, une pièce à usiner (105) ou un outil, avec une partie de pied (101) et une partie bridée (102) pour loger l'appareil, la pièce à usiner (105) ou l'outil
a) la disposition articulée à charnière (4) de la console (1) enveloppant un premier élément charnière (9) formé de façon cylindrique qui est disposé de façon pivotable mécaniquement dans un coussinet (10) prévu dans le bras de support (2) autour du premier axe de charnière (11) formant l'axe longitudinal du premier axe de charnière (9), **caractérisé en ce que**
b) le premier axe de charnière (9) de la console (1) possède dans la zone du coussinet (10) un logement en forme de rainure (12) pour un deuxième élément de charnière (13), associé au porte-appareil (5), qui peut pivoter autour du deuxième axe de charnière (14) passant par le premier axe de charnière (9) et qui s'étend vers l'extérieur par une cavité (15) dans la première extrémité (3) du bras de support (2);
c) le bras de support (2) de la console (1) présente une cavité en forme de fente (18) qui s'étend de la zone inférieure du coussinet (10) en direction de la deuxième extrémité (6) du bras de support (2) de façon qu'en pressant les deux branches (19, 20) du bras de support (2) se raccordant latéralement à la cavité en forme de fente (18), il soit possible d'exécuter une fixation du deuxième élément de charnière (13);
d) la zone pivotante du premier élément de charnière (9) de la console (1) ainsi que sa forme d'exécution sont choisies de façon que lors de la fixation du premier élément de charnière (9), une pression également des deux branches (24, 25) enveloppant le premier élément de charnière (9) et donc une fixation également du deuxième élément de charnière (13) s'effectuent par serrage;
e) la partie de pied (101) du dispositif de positionnement (100) présente une ouverture (106) centrale, carrée ou rectangulaire dans la section à laquelle à au moins deux surfaces latérales (108) se trouvant à angle droit l'une par rapport à l'autre peut être fixée respectivement une cale de réglage (109, 110) d'épaisseur pouvant être choisie indifféremment;
f) La partie bridée (102) du dispositif de positionnement (100) possède un tenon (112) correspondant à la forme de l'ouverture (106) dans la partie de pied (101) avec des dimensions plus faibles que l'ouverture (106) dans la partie de pied (101) qui est enfichable dans cette ouverture (106);
g) entre la partie de pied (101) et la partie bridée (102) du dispositif de positionnement (100) peut être placée une plaque de réglage (103) d'une épaisseur pouvant être choisie indifféremment présentant une ouverture congruente (116) vers l'ouverture (106) de la partie de pied (101);
h) le tenon (112) de la partie bridée (102) du dispositif de positionnement (100) dans l'ouverture (106) de la partie de pied (101) peut être fixé à l'aide d'un élément de fixation (115); et
i) la console (1) présente une plaque bridée (8) pouvant être associée à la partie bridée (102) du dispositif de positionnement (100).

2. Dispositif selon la revendication 1, **caractérisé en ce que** pour presser les deux branches (19, 20) du bras de support (2) de la console (1) se raccordant latéralement à la cavité (18) en forme de fente, il est prévu au moins un boulon fileté (21) dont la tige (22) peut se visser dans un taraud d'une branche (20) et dont l'extrémité côté tête (23) s'appuie à l'extérieur sur l'autre branche (19).

3. Dispositif selon la revendication 1, **caractérisé en ce que** pour éviter un déplacement axial du premier élément de charnière (9) de la console (1), celui-ci présente, sur son côté tourné vers la cavité en forme de fente (18) une cavité (31) voûtée, en forme de rainure, passant dans le sens circonférentiel dans laquelle une goupille de guidage (33) guidée par un trou (32) à travers du bras de support (2) s'engrène, la voûte de la cavité en forme de rainure (31) étant choisie de façon que le premier élément de charnière (9) puisse effectuer un mouvement pivotant donné.

4. Dispositif selon la revendication 1, **caractérisé en ce que** l'espace des bords (34, 25) de la cavité (15) de la première extrémité (3) du bras de support (2) de la console (1) est choisie de façon que le mouvement de bascule du premier élément de charnière (9) soit limité par les bords (34, 35).

5. Dispositif selon la revendication 1, **caractérisé en ce que** le premier élément de charnière (9) de la console (1) présente des cavités en forme de fente (26, 27) prolongeant côté fond les deux zones murales du logement en forme de rainure (12).

6. Dispositif selon la revendication 1, **caractérisé en ce que** le premier élément de charnière (9) de la console (1) dans la zone côté fond (28) du logement en forme de rainure (12) présente une cavité en forme de fente (29) s'étendant du côté extérieur (30) du premier élément de charnière (9) jusqu'à la proximité du fond (28) du logement en forme de rainure (12).

7. Dispositif selon la revendication 1, **caractérisé en ce que** la position du deuxième axe de charnière (14) est choisie de façon que les deux axes de charnière (11, 14) de la disposition articulée à charnière (4) de la console (1) s'entrecoupent.

8. Dispositif selon la revendication 1, **caractérisé en ce que** dans la partie frontale du bras de support (2) de la console (1) tournée vers le porte-appareil (5) en direction du premier axe de charnière (11) sont prévues deux cavités (39) avec espacement en forme de poche dans lesquelles il est possible d'introduire respectivement une goupille dont les diamètres extérieurs définissent les deux positions d'angle du bras de support (2) en référence à la face frontale mentionnée du bras de support (2) et que latéralement par rapport au porte-appareil (5) sont prévues des surfaces de butée (40) de façon que la surface de butée (40) tournée vers les goupilles touche la surface des goupilles dès que les positions d'angle données du porte-appareil (5) sont atteintes.

9. Dispositif selon la revendication 1, **caractérisé en ce que** le dispositif de positionnement (100) possède une section carrée ou circulaire, la partie de pied (101), la plaque de réglage (103) et la partie bridée (102) présentant une section de même dimension.

10. Dispositif selon la revendication 1, **caractérisé en ce que** le tenon (112) de la partie bridée (102) du dispositif de positionnement (100) présente une entaille (114) dans laquelle l'élément de fixation (115) installé à la partie de pied (101) s'engrène dans le tenon (112) en le bloquant.

11. Dispositif selon la revendication 1, **caractérisé en ce que** les parties angulaires (107) de l'ouverture (106) dans la partie de pied (101) et les parties angulaires (113) du tenon (112) à la partie bridée (102) du dispositif de positionnement (100) sont arrondies.

12. Dispositif selon la revendication 10 ou 11, **caractérisé en ce que** l'entaille (114) est formée à une partie angulaire (113) arrondie du tenon (112) à la partie bridée (102) et que l'élément de fixation (115) est placé à une partie angulaire (107) de la partie de pied (101) y correspondant.

13. Dispositif selon la revendication 1, **caractérisé en ce que** la plaque de réglage (103) et/ou la partie bridée (102) du dispositif de positionnement (100) peuvent être fixées sur la partie de pied (101) à l'aide de goupilles (107) ou de vis.

14. Dispositif selon la revendication 1, **caractérisé en ce que** les blocs de réglage (109, 110) peuvent être fixés à l'aide de goupilles ou de vis (111) aux surfaces (108) placées en angle droit l'une par rapport à l'autre de l'ouverture (106) dans la partie de pied (101) du dispositif de positionnement (100).

15. Dispositif selon la revendication 1, **caractérisé en ce que** la partie bridée (102) du dispositif de positionnement (100) présente à sa partie supérieure une quantité de perçages (104) pour fixer un appareil, une pièce à usiner (105) ou un outil.

16. Dispositif selon la revendication 1, **caractérisé en ce que** celle-ci se compose d'un alliage en aluminium, en acier ou en plastique.
